# EUROPÄISCHE PATENTSCHRIFT

(11) **EP 1 381 329 B1**
(45) Veröffentlichungstag und Bekanntmachung des Hinweises auf die Patenterteilung: **05.05.2010**
(21) Anmeldenummer: 02714180.3
(22) Anmeldetag: 06.03.2002
(51) Int. Cl.: A61C 17/22, A46B 15/00

(54) **ZAHNPUTZVORRICHTUNG ZUR ANGABE DER PUTZZEITDAUER**
TOOTH CLEANING DEVICE FOR INDICATING THE CLEANING DURATION
DISPOSITIF DE BROSSAGE DES DENTS POUR INDICATION DE LA DUREE DE BROSSAGE

(30) Priorität: 25.04.2001 DE 10120090
(43) Veröffentlichungstag der Anmeldung: 21.01.2004
(73) Patentinhaber: Braun GmbH, 61476 Kronberg (DE)
(72) Erfinder: HILFINGER, Peter, 63350 Bad Homburg (DE); HILSCHER, Alexander, 61476 Kronberg (DE); GÖCKING, Wolfgang, 61267 Neu Anspach (DE); TRAWINSKI, Peter, 64331 Weiterstadt (DE)
(86) Internationale Anmeldenummer: PCT/EP2002/002417
(87) Internationale Veröffentlichungsnummer: WO 2002/087463

(56) Entgegenhaltungen:
- EP-A- 0 210 094
- WO-A-96/14025
- WO-A-97/19650
- US-A- 4 450 599

## Beschreibung

Die Erfindung betrifft eine elektrische Zahnputzvorrichtung, insbesondere Zahnbürste, mit einem Zeitglied zur Erzeugung eines Signals nach Ablauf der Sollputzzeitdauer eines Zahnputzvorgangs.

Es ist bekannt, bei elektrischen Zahnbürsten einen Zeitschalter vorzusehen, der ausgehend vom Einschalten der elektrischen Zahnbürste nach einer vorgegebenen Zeitdauer für einen Benutzer wahrnehmbare Signale abgibt. Die Signale dienen dazu, dem Benutzer das Ende der Putzzeitdauer anzuzeigen. Bei den Signalen kann es sich um akustische oder optische Signale handeln, mit denen der Benutzer auf das Ende der optimalen Putzdauer hingewiesen werden soll. Aus der US-A-4,450,599 ist eine elektrische Zahnbürste bekannt, die einen Zeitgeber aufweist, der nach Ablauf einer voreingestellten Mindestbetriebszeit ein Signal erzeugt. Der Zeitgeber registriert nur diejenigen Benutzungszeiten der Zahnbürste, in denen die mechanische Belastung eines Borstenteils oder Stiels oberhalb eines bestimmten Mindestwerts liegt. Auf diese Weise wird erreicht, daß die tatsächliche Dauer der wirksamen Benutzung der Zahnbürste vom Zeitgeber registriert wird. Aus der WO 96/14025 ist es bekannt, kein akustisches oder optisches Timer-Signal abzugeben, sondern statt dessen den Antriebsmotor der Zahnbürste mehrfach kurzfristig ein- und auszuschalten, so dass der Antriebsmotor stottert. Dies kann von dem Benutzer unmittelbar in der Hand bzw. im Mund gespürt werden.

Desweiteren kann vorgesehen sein, dass die elektrische Zahnbürste nach Ablauf der Sollputzzeitdauer automatisch abgeschaltet wird. Dies ist jedoch unzweckmäßig, wenn das Timer-Signal lediglich anzeigen soll, dass ein Teilbereich der Zähne wie z.B. ein Gebissquadrant zu Ende geputzt ist. In der WO 97/19650 ist deshalb vorgeschlagen, nach dem Stotterbetrieb wieder einen regulären Putzbetrieb zu schalten, so dass der Gebissquadrant nach Wunsch des Benutzers zu Ende geputzt werden kann. Sobald der Benutzer auf einen weiteren Gebissquadranten wechselt, kann er mittels eines Tasters das Zeitglied neu starten, um für diesen neuen Gebissquadranten wiederum die Sollputzzeitdauer angegeben zu bekommen. Dieses Verfahren zur Angabe der Sollputzzeitdauer erfüllt jedoch dennoch nicht die Wünsche aller Zahnbürstenbenutzer.

Der vorliegenden Erfindung liegt daher die Aufgabe zugrunde, eine verbesserte Zahnputzvorrichtung der genannten Art zu schaffen, die Nachteile des Standes der Technik vermeiden und letzteren in vorteilhafter Weise weiterbilden. Insbesondere soll ein den Bedürfnissen der Benutzer besser entgegenkommender Timer zur Anzeige der Sollputzzeitdauer angegeben werden.

Dies Aufgabe wird durch eine Zahnputzvorrichtung gemäß Patentanspruch 1 gelöst.

Bevorzugte Ausführungen der Erfindung sind Gegenstand der Unteransprüche.

Erfindungsgemäß wird die Sollputzzeitdauer variabel festgelegt, insbesondere dann, wenn vorgegebene Putzzeiten vom Benutzer nicht eingehalten werden. Es wird mittels einer Zeiterfassungseinrichtung eine tatsächliche Putzzeitdauer des Zahnputzvorganges erfasst, mittels einer Auswerteeinheit die Abweichung der erfassten tatsächlichen Putzzeitdauer von einer vorgebbaren, gegebenenfalls konstanten oder auch variablen, von Parametern abhängigen Standardputzzeitdauer bestimmt, sowie mittels einer Steuereinrichtung die Sollputzzeitdauer, nach deren Ablauf das Timer-Signal abgegeben wird, für einen späteren Zahnputzvorgang in Abhängigkeit der festgestellten Abweichung neu festgelegt. Die Sollputzzeitdauer kann somit persönlichen Putzgewohnheiten und/oder beispielsweise dem Tagesrythmus des Benutzers angepasst werden. Hinter dem variablen Timer-Signal steht die Überlegung, dass auch eine Kombination aus kurzen und längeren Putzvorgängen infolge des variablen Timer-Signals im Mittel ein gutes oder zufriedenstellendes Putzergebnis liefern kann, da ein zu kurzer Putzvorgang durch eine verlängerte Putzzeitdauer beim nächsten oder übernächsten oder einem nachfolgenden späteren Zahnputzvorgang kompensiert werden. Die gegebenenfalls variable Standardputzzeitdauer kann benutzerspezifisch, beispielsweise für Kinder oder Erwachsene, und/oder reinigungswerkzeugspezifisch, beispielsweise in Abhängigkeit des gerade verwendeten Werkzeuges, wie flächige Bürste, Interdentalbürste, Flossvorsatz oder dergleichen, unterschiedliche Werte annehmen.

In Weiterbildung der Erfindung wird ein Putzzeitkonto geführt, das die Abweichungen der tatsächlichen Putzzeitdauer von der vorgegebenen Standardputzzeitdauer bei mehreren vorhergehenden Zahnputzvorgängen berücksichtigt. Es kann ein Putzzeitspeicher vorgesehen sein, der die Summe von über mehrere Zahnputzvorgänge hinweg bestimmten Abweichungen zwischen den jeweils tatsächlichen Putzzeitdauern und der Standardputzzeitdauer speichert. Die Steuereinrichtung greift bei der Festlegung der Sollputueitdauer für einen neuerlichen Zahnputzvorgang sodann auf den Putzzeitspeicher zu und bestimmt die Sollputzzeitdauer in Abhängigkeit der bei einem oder mehreren vorhergehenden Putzvorgängen bestimmten Abweichungen. Bei mehrfachen Abweichungen werden sodann entsprechend stärkere bzw. bei gegenteiligen Abweichungen auch schwächere Veränderungen der Sollputzzeitdauer veranlasst. Insbesondere wird die Sollputzzeitdauer gegenüber der Standardputzzeitdauer stärker verlängert, wenn mehrfach nur ein verkürzter Zahnputzvorgang durchgeführt wurde.

Vorzugsweise werden die Abweichungen zwischen tatsächlicher Putzzeitdauer und Standardputzzeitdauer nur bis zu einem vorgegebenen Betrag berücksichtigt, Insbesondere können die Abweichungen zwischen den tatsächlichen Putzzeiten und der Standardputzzeitdauer nur bis zu einer gewissen Kappungsgrenze aufsummiert und im Putzzeitspeicher abgespeichert werden. Bei Überschreiten der Kappungsgrenze kann der Grenzwert berücksichtigt bzw. der Sollzeitveränderung zugrunde gelegt werden.

Es ist ebenfalls möglich, nicht nur die Summe der Abweichungen zu begrenzen, sondern auch für die einzelnen Abweichungen eine Kappungsgrenze vorzusehen. Weicht die tatsächliche Putzzeitdauer zu stark von der vorgegebenen Standardputzzeitdauer ab, wird für die Veränderung der Sollputzzeitdauer des nächsten Zahnputzvorganges nur der vorgegebene Maximalbetrag der Abweichung zugrunde gelegt. Gegebenenfalls wird der entsprechende Zahnputzvorgang überhaupt nicht berücksichtigt. Einer solchen Begrenzung der berücksichtigten Abweichungen liegt die Überlegung zugrunde, dass ein Ausgleich unterschiedlicher Zahnputzvorgänge nur in einem gewissen Rahmen möglich ist und optimale Zahnpflege nicht erreicht werden kann, wenn zu starke Schwankungen auftreten. Es findet also nur eine Veränderung der Sollputzzeitdauer in einem gewissen Bereich statt.

Insbesondere kann vorgesehen sein, dass die Steuereinrichtung die Sollputzzeitdauer stets innerhalb eines vorbestimmten Bereichs festgelegt wird. Dieser Bereich kann grundsätzlich verschieden ausgebildet sein. So kann insbesondere eine maximale Verlängerung der Sollputzzeitdauer vorgesehen sein.

Die Bereichsgrenze für die Sollputzzeitdauer nach unten kann verschieden festgelegt werden. Nach einer vorteilhaften Ausführung der Erfindung kann als minimale Sollputzzeitdauer die Standardputzzeitdauer vorgesehen sein. Die Steuereinrichtung legt die Sollputzzeitdauer stets größer oder gleich der Standardputzzeitdauer fest. Selbst wenn der Benutzer durch zu langes Zähneputzen über die Sollputzzeitdauer hinaus sein Putzzeitkonto positiv auffüllt, wird der Timer von der Steuereinrichtung beim nächsten Zahnputzvorgang dennoch nicht vor Ablauf der Standardputzzeitdauer aktiviert.

Gemäß einer alternativen Ausführung der Erfindung kann vorgesehen sein, dass die Sollputzzeitdauer gegenüber der Standardputzzeitdauer nicht nur verlängert, sondern auch verkürzt werden kann. Für das Putzzeitkonto werden also auch Putzzeiten über die Sollputzzeitdauer hinaus berücksichtigt und für die Bestimmung der nächsten Sollputzzeitdauer herangezogen. Wenn ein Benutzer beispielsweise am Abend über die Standardputzzeitdauer hinaus seine Zähne besonders lange putzt, kann ein entsprechendes Guthaben auf das Putzzeitkonto gebucht und die Sollputzzeitdauer am nächsten Morgen entsprechend verkürzt werden, gegebenenfalls auch unter die normale Standardputzzeitdauer.

Die bei einem vorhergehenden Putzvorgang bzw. bei mehreren vorhergehenden Putzvorgängen ermittelten Abweichungen können in verschiedener Weise bei der Festlegung der Sollputzzeitdauer Berücksichtigung finden. So kann grundsätzlich vorgesehen werden, die Abweichungen nur zum Teil bei der Veränderung der Sollputzzeitdauer weiterzugeben. Beispielsweise kann eine über die Standardputzzeitdauer um dreissig Sekunden hinaus verlängerte tatsächliche Putzzeitdauer zu einer nur 15-sekündigen Verkürzung der nächsten Sollputzzeitdauer führen. Nach einer vorteilhaften Ausführung der Erfindung wird die bestimmte Abweichung bzw. die Summe der bestimmten Abweichungen zwischen tatsächlichen Putzzeiten und Standardputzzeitdauer unmittelbar, das heißt eins zu eins zur Bestimmung der Sollputzzeitdauer auf die Standardputzzeitdauer aufgeschlagen bzw. von dieser abgezogen. Dies erfolgt vorzugsweise nur innerhalb der festgelegten Grenzen, so dass die Sollputzzeitdauer stets lediglich innerhalb der vorbestimmten Kappungsgrenzen verändert wird.

In Weiterbildung der Erfindung werden für das Putzzeitkonto nur Zahnputzvorgänge berücksichtigt, die bestimmten Mindestanforderungen entsprechen, insbesondere länger als eine Mindestzeitdauer andauern. Liegt die tatsächliche Putzzeitdauer eines Zahnputzvorganges unter der Mindestgrenze, die verschieden, beispielsweise benutzer- oder reinigungswerkzeugspezifisch, festgelegt sein und z.B. dreissig Sekunden betragen kann, wird keine Abweichung zwischen der tatsächlichen Putzzeitdauer und der Standardputzzeitdauer bestimmt bzw. findet eine solche keine Berücksichtigung bei der Festlegung der Sollputzzeitdauer eines späteren Zahnputzvorgangs.

Um dem Benutzer der Zahnputzvorrichtung die Anpassung des Timers bzw. seine Abweichungen von der Standardputzzeitdauer besser zu verdeutlichen, kann vorgesehen sein, dass bei einer gegenüber der Standardputzzeitdauer veränderten, insbesondere verlängerten Sollputzzeitdauer bereits zu Anfang des jeweiligen Zahnputzvorganges ein entsprechendes Warnsignal abgegeben wird, das dem Benutzer anzeigt, dass der letzte Zahnputzvorgang zu kurz war und diesmal eine dementsprechend längere Sollputzzeitdauer erforderlich ist.

Ferner kann in Weiterbildung der Erfindung vorgesehen sein, dass bei Abbruch eines Zahnputzvorganges vor Erreichen der Standardputzzeitdauer ein Warnsignal abgegeben wird, dass dem Benutzer anzeigt, dass er zu kurz die Zähne putzt. Es kann vorzugsweise auch vorgesehen sein, dass ein weiteres Warnsignal abgegeben wird, wenn der Zahnputzvorgang vor Erreichen der jeweiligen variablen Sollputzzeitdauer abgebrochen wird. Zweckmäßigerweise sind die genannten Warnsignale voneinander verschieden, so dass jeweils klar ist, welche Veränderung bzw. Abweichung vorgenommen bzw. erfolgt ist.

Um eine angemessene Erfassung und Auswertung der tatsächlichen Putzzeiten zu erreichen, kann ein Nachlauftimer vorgesehen sein. Bei der Erfassung der tatsächlichen Putzzeitdauer können kurzzeitige Unterbrechungen des Zahnputzvorgangs ignoriert werden. Dies kann insbesondere bei einem kurzzeitigen Ein- und Ausschalten der Zahnputzvorrichtung sinnvoll sein, wenn z.B. von einem Gebissquadranten zum nächsten Gebissquadranten gewechselt wird oder z.B. Zahnpasta aus dem Mund entfernt und dabei die Zahnbürste kurzzeitig abgeschaltet wird. Würde die Zeiterfassung und die entsprechende Auswertung jedesmal neu anlaufen, kämen ansonsten gegebenenfalls wenig sinnvolle Ergebnisse zustande.

Nachfolgend wird die Erfindung anhand eines bevorzugten Ausführungsbeispiels und zugehöriger Zeichnungen näher erläutert. In den Zeichnungen zeigen:
- Figur 1: eine schematische Darstellung einer erfindungsgemäßen elektrischen Zahnbürste,
- Figur 2: ein Blockdiagramm eines variablen Zeitglieds der elektrischen Zahnbürste aus Figur 1, und
- Figur 3: ein Ablaufdiagramm des variablen Zeitglieds, das die Veränderungen eines Putzzeitkontos über mehrere Putzvorgänge hinweg verdeutlicht.

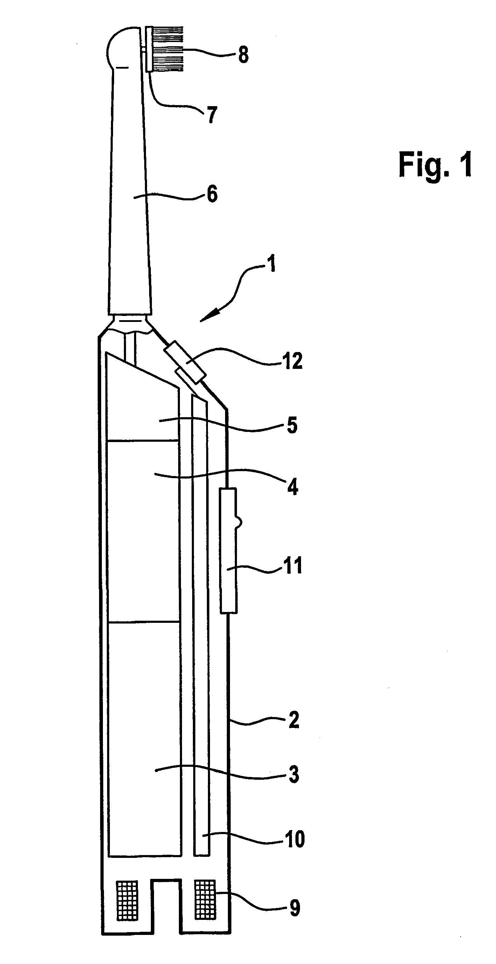

In der Figur 1 ist eine elektrische Zahnbürste 1 dargestellt, bei der in einem Gehäuse 2 ein Akkumulator 3, ein Motor 4 und ein Getriebe 5 untergebracht sind. Auf ein freies Ende der elektrischen Zahnbürste 1 ist eine Aufsatzbürste 6 aufsteckbar, die einen rotatorisch gelagerten Borstenträger 7 mit daran befestigten Borsten 8 aufweist. Der Borstenträger 7 ist um eine zur Längsachse der Aufsatzbürste 6 im wesentlichen senkrechte Rotationsachse in an sich bekannter Weise vom Motor 4 her oszillierend rotatorisch antreibbar.

In dem Gehäuse 2 der Zahnbürste 1 sind desweiteren eine Spule 9 sowie eine Steuereinrichtung 10 in Form einer Leiterplatte untergebracht. Die Spule 9 ist an dem der Aufsatzbürste 6 gegenüberliegenden Ende des Gehäuses 2 angeordnet und dient der Aufladung des Akkumulators 3. Die Steuereinrichtung 10 umfasst verschiedene elektronische Bauteile, die den Betrieb der elektrischen Zahnbürste 1 steuern. Von außen zugänglich ist in der Wandung des Gehäuses 2 ein Schalter 11 angeordnet, mit dem der Motor 4 der Zahnbürste ein- und ausgeschaltet werden kann. Zudem ist in der Wandung des Gehäuses 2 eine Ausgabeeinheit 12 angeordnet, die mit der Steuereinrichtung 10 verbunden ist und dazu dient, Signale insbesondere das Timer-Signal zur Anzeige des Ablaufs der Sollputzzeitdauer abzugeben. Die Ausgabeeinheit 12 kann verschieden ausgebildet sein, z.B. optisch oder akustisch. Es kann auch eine andere Ausgabe der Signale vorgesehen sein. Zum Beispiel kann der Motor 11 in Stotterbetrieb versetzt werden, wie dies in der WO 97/19650 beschrieben ist. Bezüglich der Ausbildung des Timer-Signals wird insoweit ausdrücklich auf die genannte WO 97/19650 Bezug genommen.

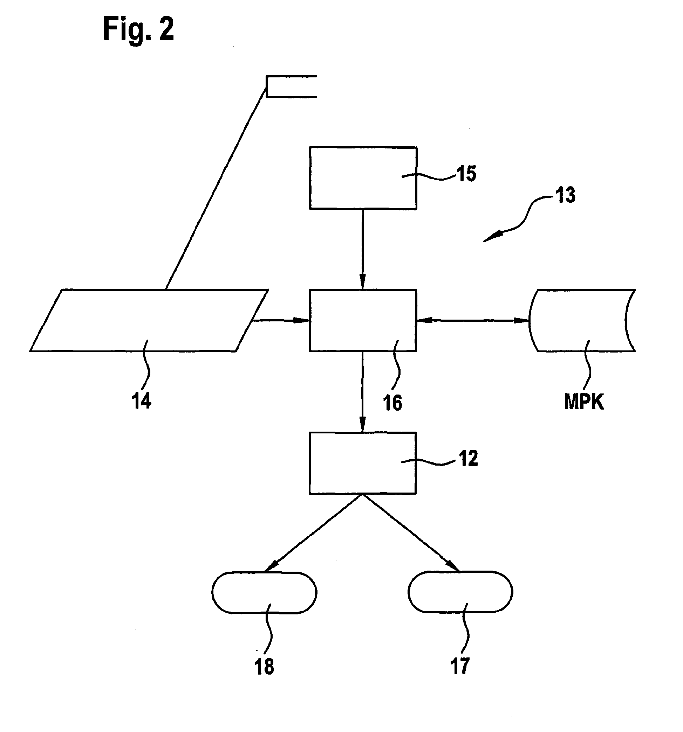

Die Steuereinrichtung 10 umfasst insbesondere ein Zeitglied bzw. einen Timer zur Erzeugung eines Timer-Signals nach Ablauf einer Sollputzzeitdauer. Ein solcher Timer ist in Figur 2 dargestellt und allgemein mit der Bezugsziffer 13 versehen. In einem Speicher 14 sind zunächst Putzkonstanten abgelegt, die die Randbedingungen des Sollputzvorganges festlegen. Insbesondere können in dem Speicher eine Standardputzzeitdauer und eine Mindestputzzeitdauer für einen gültigen Putzvorgang abgelegt sein.

Desweiteren ist eine Zeiterfassungsvorrichtung 15 vorgesehen, die vom Schalter 11 durch Einschalten des Motors 4 aktiviert werden kann. Vorzugsweise besitzt sie Nachlaufmittel, so dass sie bei kurzzeitiger Unterbrechung des Motorbetriebs weiterläuft. Sie erfasst die Zeit zwischen Einschalten des Motors 4 und seinem endgültigen Abschalten. Zentraler Baustein des Timers bzw. des Zeitglieds zur Abgabe des Timer-Signals ist die Auswerteeinrichtung 16, die zum einen Zugriff auf den Speicher 14 hat und zum anderen mit der Zeiterfassungsvorrichtung 15 verbunden ist, um die tatsächliche Putzzeitdauer zu erhalten. Sie bestimmt die Abweichungen der jeweils erfassten tatsächlichen Putzzeiten von der im Speicher 14 abgelegten Standardputzzeitdauer. Sie legt die bestimmten Abweichungen auf einem Putzzeitkonto MPK ab, und bestimmt anhand der Abweichungen aus vorhergehenden Zahnputzvorgängen die Sollputzzeitdauer, nach deren Ablauf ein Timer-Signal abgegeben wird. Der Speicher 14 und das Putzzeitkonto MPK können, wie in der Zeichnung dargestellt, von separaten Speicherbausteinen gebildet werden. Sie können jedoch alternativ auch von einem gemeinsamen Speicher gebildet sein. Zur Abgabe des Timer-Signals ist die Auswerteeinrichtung 16 mit der Ausgabeeinheit 12 verbunden. Diese kann zum einen ein Timer-Signal 17 abgeben, das den Ablauf der variabel festgelegten Sollputzzeitdauer anzeigt. Sie kann ferner verschiedene Warnsignale 18 abgeben, die dem Benutzer verschiedene Abweichungen bzw. Veränderungen der Zeitschaltung anzeigen. Insbesondere kann ein erstes Warnsignal W1 abgegeben werden, wenn ein Putzvorgang unter der Mindestputzzeitdauer abgebrochen wird. Ein zweites Warnsignal W2 kann abgegeben werden, wenn der Benutzer das Gerät vor dem Erreichen des Timer-Signals 17 abschaltet. Das Warnsignal W2 ist vorzugsweise von dem ersten Warnsignal W1 unterscheidbar. Schließlich kann, um beim nächsten Putzvorgang auf eine gegenüber der Standardputzzeitdauer veränderte Sollputzzeitdauer aufmerksam zu machen, unmittelbar nach dem Einschalten ein drittes Warnsignal W3 bzw. Hinweissignal abgegeben werden, dass von den vorhergehenden Signalen unterscheidbar ist und dem Benutzer anzeigt, dass die Timer-Zeit verändert wurde. Die genannten Signale können optisch oder akustisch abgegeben werden. Es kann auch der zuvor beschriebene Stotterbetrieb des Motors vorgesehen sein. Andere Signalabgabeformen sind möglich.

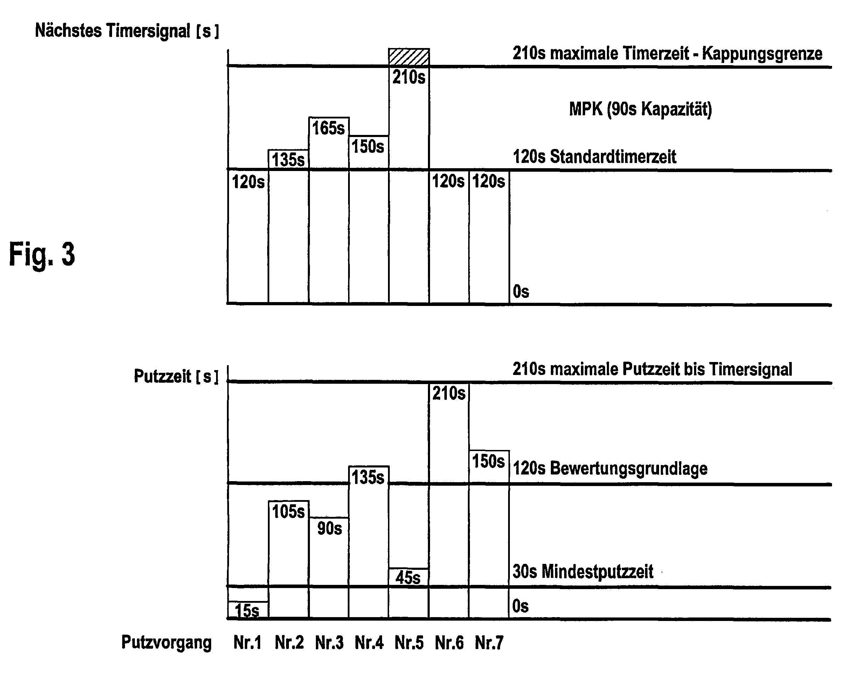

Nachfolgend wird die Funktion der Zahnbürste 1 und insbesondere des Zeitglieds 13 anhand verschiedener Putzvorgänge in Verbindung mit Figur 3 näher erläutert.

Zunächst sei das von der Auswerteeinrichtung 16 geführte Putzzeitkonto MPK leer. Für das Putzzeitkonto ist eine Kappungsgrenze von neunzig Sekunden vorgesehen, das heißt es können Abweichungen zwischen tatsächlicher Putzzeitdauer und Standardputzzeitdauer bis zu lediglich insgesamt neunzig Sekunden aufsumiert werden. Das Putzzeitkonto hat eine Kapazität von neunzig Sekunden. Die im Speicher 14 abgelegte Standardputzzeitdauer beträgt bei dem gezeigten Ausführungsbeispiel 120 Sekunden. Die ebenfalls im Speicher 14 abgelegte Mindestputzzeitdauer für einen gültigen Putzvorgang ist mit dreissig Sekunden festgelegt.

Bei einem ersten Putzvorgang bricht der Benutzer seinen Putzvorgang nach 15 Sekunden ab, ohne ein Signal des Zeitglieds 13 abzuwarten. Es ertönt beim Ausschalten das erste Warnsignal W 1, dass der Putzvorgang zu kurz war und nicht für die Zeitbilanz gewertet wird. Das Putzzeitkonto bleibt dementsprechend leer.

Bei einem zweiten Putzvorgang bricht der Benutzer seinen Putzvorgang nach 105 Sekunden ebenfalls wieder ohne Timer-Signal ab. Es ertönt das Warnsignal W2 beim Ausschalten, das angibt, dass die empfohlene Standardputzzeitdauer nicht erreicht worden ist. Die Auswerteeinrichtung 16 bestimmt nunmehr die Abweichung zwischen der tatsächlichen Putzzeitdauer und der gespeicherten Standardputzzeitdauer. Auf das Putzzeitkonto wird die Differenz von 105 Sekunden und 120 Sekunden, nämlich 15 Sekunden Minderzeit gebucht. Das Putzzeitkonto erhält damit den Wert von 15 Sekunden Minderzeit.

Bei einem dritten Putzvorgang wird der Timer nunmehr umkonfiguriert. Die Sollputzzeitdauer wird auf einen von der Standardputzzeitdauer verschiedenen Wert gesetzt. Die Sollputzzeitdauer wird auf die Summe aus der Standardputzzeitdauer von 120 Sekunden und dem im Putzzeitkonto gespeicherten Wert von 15 Sekunden, nämlich auf ein 135 Sekunden gesetzt. Um auf die nun verlängerte Putzzeitdauer aufmerksam zu machen, ertönt unmittelbar nach dem Einschalten der Zahnbürste das dritte Warnsignal W3, um dem Benutzer anzuzeigen, dass eine verlängerte Sollputzzeitdauer einzuhalten ist. Der Benutzer bricht jedoch seinen Putzvorgang nach neunzig Sekunden ohne Timer-Signal ab. Das zweite Warnsignal W2 ertönt. Die Auswerteeinrichtung 16 bestimmt erneut eine Minderzeit von dreissig Sekunden. Diese Abweichung wird mit der zuvor bestimmten Abweichung aufsumiert, so dass das Putzzeitkonto auf einen Wert von 45 Sekunden gesetzt wird.

Beim vierten Putzvorgang wird zunächst der Timer entsprechend dem im Putzzeitkonto gespeicherten Abweichungen eingestellt. Auf die Standardputzzeitdauer von 120 Sekunden wird die Summe der im Putzzeitkonto gespeicherten Abweichungen von 45 Sekunden aufaddiert, so dass die Sollputzzeitdauer auf 165 Sekunden eingestellt wird. Beim Einschalten ertönt das Warnsignal W3, das die verlängerte Sollputzzeitdauer angibt. Der Benutzer bricht seinen Putzvorgang diesmal nach 135 Sekunden ohne Timer-Signal ab. Es ertönt erneut das Warnsignal W2. Diesmal verringert sich jedoch der Wert des Putzzeitkontos, da der Putzvorgang länger als die Standardputzzeitdauer von 120 Sekunden dauerte. Die Minderputzzeitdauer wird um die Differenz von 135 Sekunden zur Standardputzzeitdauer von 120 Sekunden verringert. Im Putzzeitkonto ist eine Minderzeit von nunmehr dreissig Sekunden gespeichert.

Beim fünften Putzvorgang wird die Sollputzzeitdauer entsprechend der im Putzzeitkonto gespeicherten Minderzeit von dreissig Sekunden auf 150 Sekunden eingestellt, was der Summe der Standardputzzeitdauer und der gespeicherten Minderputzzeitdauer entspricht. Beim Einschalten ertönt erneut das Signal W3. Der Benutzer bricht seinen Putzvorgang jedoch nach 45 Sekunden ohne Timer-Signal ab, so dass erneut das zweite Warnsignal W2 abgegeben wird. Die Auswerteeinrichtung 16 bestimmt eine Abweichung von 75 Sekunden zur Standardputzzeitdauer von 120 Sekunden. Dementsprechend müsste das Putzzeitkonto auf eine Minderzeit von 105 Sekunden gesetzt werden. Da jedoch eine Kappungsgrenze von 90 Sekunden für das Putzzeitkonto vorgesehen ist, wird der Grenzwert der Minderzeit von neunzig Sekunden im Putzzeitkonto gespeichert.

Entsprechend der maximalen Minderzeit von neunzig Sekunden, die im Putzzeitkonto MPK gespeichert ist, wird die Sollputzzeitdauer und dementsprechend der Timer 13 auf die Summe der Standardputzzeitdauer von 120 Sekunden und der maximalen Minderputzzeitdauer von neunzig Sekunden, das heißt auf 210 Sekunden eingestellt. Beim Einschalten der Zahnbürste ertönt erneut das Warnsignal W3. Der Benutzer putzt die eingestellte Timerzeit und nach 210 Sekunden wird von der Ausgabeeinheit 12 das Timer-Signal 17 abgegeben. Da die Sollputzzeitdauer vollständig abgearbeitet wurde, wird das Putzzeitkonto zurückgesetzt. Die gespeicherte Minderzeit beträgt nunmehr 0 Sekunden.

Im siebten und nach der Darstellung letzten Putzvorgang wird der Timer auf die Standarddauer von 120 Sekunden gesetzt, da im Putzzeitkonto keine Fehlzeiten gespeichert sind. Es ertönt diesmal kein Warnsignal beim Einschalten der Zahnbürste. Der Benutzer putzt bis zum Timer-Signal, das nach 120 Sekunden abgegeben wird und dann noch weitere 30 Sekunden bis zu einer gesamten Putzzeitdauer von 150 Sekunden. In der bezeichneten Ausführungsform werden über die Sollputzzeitdauer hinausgehende tatsächliche Putzzeiten nicht gewertet, das heißt das Putzzeitkonto wird bei Erreichen der Sollputzzeitdauer lediglich auf 0 gesetzt. Dies war im vorliegenden Fall schon gegeben, so dass der Wert des Putzzeitkontos MPK auf 0 Sekunden bleibt.

## Patentansprüche

1. Elektrische Zahnputzvorrichtung, insbesondere -bürste, mit einem Zeitglied (13) zur Erzeugung eines Signals nach Ablauf einer Sollputzzeitdauer eines Zahnputzvorgangs, und mit einer Zeitertassungsvorrichtung (15) zur Erfassung einer tatsächlichen Putzzeitdauer des Zahnputzvorgangs **dadurch gekennzeichnet, dass** eine Auswerteeinheit (16) zur Bestimmung einer Abweichung der erfassten tatsächlichen Putzzeitdauer von einer vorgebbaren Standardputzzeitdauer, sowie eine Steuereinrichtung (10) zur Veränderung der Sollputzzeitdauer in Abhängigkeit der bestimmten Abweichung vorgesehen sind.

2. Zahnputzvorrichtung nach Anspruch 1, **dadurch gekennzeichnet, daß** ein Putzzeitspeicher (14) zur Speicherung einer Summe von über mehrere Zahnputzvorgänge hinweg bestimmter Abweichungen zwischen den jeweiligen tatsächlichen Putzzeitdauern und der Standardputzzeitdauer vorgesehen ist, und die Steuereinrichtung (10) derart ausgebildet ist, dass die Sollputzzeitdauer des jeweiligen Zahnputzvorgangs in Abhängigkeit der gespeicherten Summe der bestimmten Abweichungen festgelegt wird.

3. Zahnputzvorrichtung nach einem der vorhergehenden Ansprüche 1 oder 2, **dadurch gekennzeichnet, daß** eine Begrenzungseinrichtung zur Begrenzung der Summe der Abweichungen, die im Putzzeitspeicher (14) gespeichert wird, vorgesehen ist.

4. Zahnputzvorrichtung nach einem der vorhergehenden Ansprüche 1 bis 3, **dadurch gekennzeichnet, daß** in dem Putzzeitspeicher (14) Sollputzzeitgrenzen gespeichert sind und die Steuereinrichtung derart ausgebildet ist, dass die Sollputzzeitdauer stets innerhalb der gespeicherten Grenzen festgelegt wird.

5. Zahnputzvorrichtung nach einem der vorhergehenden Ansprüche 1 bis 4, **dadurch gekennzeichnet, daß** die Steuereinrichtung derart ausgebildet ist, dass die Sollputzzeitdauer stets größer oder gleich der Standardputzzeitdauer festgelegt wird.

6. Zahnputzvorrichtung nach einem der Ansprüche 1 bis 4, **dadurch gekennzeichnet, daß** die Steuereinrichtung derart ausgebildet ist, dass die Sollputzzeitdauer größer und/oder gleich und/oder kleiner der Standardputzzeitdauer festgelegt wird.

7. Zahnputzvorrichtung nach einem der vorhergehenden Ansprüche 1 bis 6, **dadurch gekennzeichnet, daß** die Steuereinrichtung eine Sumiereinrichtung zur Aufsumierung der Standardputzzeitdauer und der zuvor bestimmten Abweichung bzw der Summe der zuvor bestimmten Abweichungen aufweist und die Steuereinrichtung derart ausgebildet ist, dass sie als Sollputzzeitdauer die Summe aus Standardputzzeitdauer und abgespeicherten Abweichungen festlegt.

8. Zahnputzvorrichtung nach einem der vorhergehenden Ansprüche 1 bis 7, **dadurch gekennzeichnet, daß** ein Mindestputzzeitglied vorgesehen ist, dass bei Unterschreiten einer Mindestputzzeitdauer die Berücksichtigung der Abweichung zwischen tatsächlicher Putzzeitdauer und Standardputzzeitdauer für die Festlegung der Sollputzzeitdauer unterdrückt.

9. Zahnputzvorrichtung nach einem der vorhergehenden Ansprüche 1 bis 8, **dadurch gekennzeichnet, daß** eine Warnsignaleinrichtung zur Abgabe eines Warnsignals (W3) bei einer gegenüber der Standardputueitdauer veränderten, insbesondere verlängerten Sollputzzeitdauer zu Anfang des jeweiligen Zahnputzvorganges vorgesehen ist.

10. Zahnputzvorrichtung nach einem der vorhergehenden Ansprüche 1 bis 9, **dadurch gekennzeichnet, daß** eine Warnsignaleinrichtung zur Abgabe eines Warnsignal (W1, W2) bei Abbruch eines Zahnputzvorganges vor Erreichen der Standardputzzeitdauer und/oder der Sollputzzeitdauer und/oder der Mindestputzzeitdauer vorgesehen ist.

11. Zahnputzvorrichtung nach einem der vorhergehenden Ansprüche 1 bis 10, **dadurch gekennzeichnet, daß** die Zeiterfassungsvorrichtung (15) ein Nachlaufglied zur Erfassung der tatsächlichen Putzzeitdauer über kurzzeitige Unterbrechungen des Zahnputzvorgangs hinweg aufweist.

## Claims

1. An electrical tooth cleaning device, in particular a toothbrush, with a timing element (13) that creates a signal after the intended cleaning duration of a tooth cleaning process has ended, and with a time-recording instrument (15) that records the actual cleaning duration of the tooth cleaning process, **characterized in that** an evaluation unit (16) for determining how much the actual recorded cleaning duration deviates from a preset default cleaning duration, as well as a control device (10) for adjusting the intended cleaning duration, depending on the calculated deviation, are provided.

2. The tooth cleaning device according to Claim 1, **characterized in that** a cleaning-duration memory (14) is provided for storing a total amount of the deviation calculated over several tooth-cleaning procedures between the actual cleaning duration in each case and the default cleaning duration, and the control device (10) is designed so that the intended cleaning duration for each tooth-cleaning procedure is adjusted, depending on the stored total amount of the calculated deviation.

3. The tooth cleaning device according to any of the preceding Claims 1 or 2, **characterized in that** a limiting device is provided for limiting the total amount of deviation that is stored in the cleaning-duration memory (14).

4. The tooth cleaning device according to any of the preceding Claims 1 through 3, **characterized in that** intended cleaning duration limits are stored in the cleaning-duration memory (14), and the control device is designed so that the intended cleaning duration is always adjusted within the stored limits.

5. The tooth cleaning device according to any of the preceding Claims 1 through 4, **characterized in that** the control device is designed so that the intended cleaning duration is always adjusted to greater than or equal to the default cleaning duration.

6. The tooth cleaning device according to any of the preceding Claims 1 through 4, **characterized in that** the control device is designed so that the intended cleaning duration is adjusted to greater than and/or equal to and/or less than the default cleaning duration.

7. The tooth cleaning device according to any of the preceding Claims 1 through 6, **characterized in that** the control device has an totalling instrument for adding up the default cleaning duration and the previously calculated deviation and/or the total amount of the previously calculated deviation, and the control device is designed so that it adjusts the total amount of the default cleaning duration and the stored deviation as the intended cleaning duration.

8. The tooth cleaning device according to any of the preceding Claims 1 through 7, **characterized in that** a minimum cleaning duration element is provided that prevents taking into account the deviation between the actual cleaning duration and the default cleaning duration for calculating the intended cleaning duration when a minimum cleaning duration is not achieved.

9. The tooth cleaning device according to any of the preceding Claims 1 through 8, **characterized in that** a warning signal device is provided that emits a warning signal (W3) at the beginning of each tooth cleaning procedure if an intended cleaning duration is different, in particular longer, than the default cleaning duration.

10. The tooth cleaning device according to any of the preceding Claims 1 through 9, **characterized in that** a warning signal device is provided that emits a warning signal (W1, W2) if a tooth cleaning procedure is stopped before the default cleaning duration and/or the intended cleaning duration and/or the minimum cleaning duration is reached.

11. The tooth cleaning device according to any of the preceding Claims 1 through 10, **characterized in that** the time-recording device (15) has a delay element that records the actual cleaning duration after brief interruptions of the tooth cleaning process.

## Revendications

1. Dispositif électrique de brossage des dents, en particulier -brosse à dents, comprenant une minuterie (13) pour produire un signal après écoulement d'un temps de brossage voulu d'une opération de brossage des dents, et comprenant un dispositif d'enregistrement du temps (15) pour enregistrer un temps de brossage effectif de l'opération de brossage des dents, **caractérisé en ce qu'**il existe une unité d'évaluation (16) pour déterminer un écart entre le temps de brossage effectif enregistré et un temps de brossage standard pouvant être prédéfini, ainsi qu'un dispositif de commande (10) pour modifier le temps de brossage voulu en fonction de l'écart déterminé.

2. Dispositif de brossage des dents selon la revendication 1, **caractérisé en ce qu'**il existe une mémoire (14) de temps de brossage pour mémoriser une somme d'écarts, déterminés au cours de plusieurs opérations de brossage des dents, entre les temps de brossage effectifs respectifs et le temps de brossage standard, et le dispositif de commande (10) est configuré de telle sorte que le temps de brossage voulu de l'opération de brossage des dents correspondante est défini en fonction de la somme mémorisée des écart déterminés.

3. Dispositif de brossage des dents selon l'une des revendications 1 ou 2, **caractérisé en ce qu'**il existe un dispositif de limitation pour limiter la somme des écarts qui est mémorisée dans la mémoire (14) de temps de brossage.

4. Dispositif de brossage des dents selon l'une des revendications 1 à 3, **caractérisé en ce que** des limites du temps de brossage voulu sont mémorisées dans la mémoire (14) de temps de brossage et le dispositif de commande est configuré de telle sorte que le temps de brossage voulu est toujours défini à l'intérieur des limites mémorisées.

5. Dispositif de brossage des dents selon l'une des revendications 1 à 4, **caractérisé en ce que** le dispositif de commande est configuré de telle sorte que le temps de brossage voulu est toujours fixé supérieur ou égal au temps de brossage standard.

6. Dispositif de brossage des dents selon l'une des revendications 1 à 4, **caractérisé en ce que** le dispositif de commande est configuré de telle sorte que le temps de brossage voulu est fixé supérieur et/ou égal et/ou inférieur au temps de brossage standard.

7. Dispositif de brossage des dents selon l'une des revendications 1 à 6, **caractérisé en ce que** le dispositif de commande présente un dispositif de totalisation pour additionner le temps de brossage standard et l'écart déterminé auparavant ou la somme des écarts déterminés auparavant et le dispositif de commande est configuré de telle sorte qu'il définit comme temps de brossage voulu la somme calculée à partir du temps de brossage voulue et des écarts mémorisés.

8. Dispositif de brossage des dents selon l'une des revendications 1 à 7, **caractérisé en ce qu'**il existe une minuterie de temps de brossage minimum qui, lorsque le temps de brossage devient inférieur à un minimum, atténue la prise en considération de l'écart entre le temps de brossage effectif et le temps de brossage standard pour définir le temps de brossage voulu.

9. Dispositif de brossage des dents selon l'une des revendications 1 à 8, **caractérisé en ce qu'**il existe un dispositif avertisseur pour émettre un signal d'avertissement (W3) au début de l'opération de brossage des dents correspondante en présence d'un temps de brossage voulu modifié, en particulier allongé, par rapport au temps de brossage standard.

10. Dispositif de brossage des dents selon l'une des revendications 1 à 9, **caractérisé en ce qu'**il existe un dispositif avertisseur pour émettre un signal d'avertissement (W1, W2) en cas d'interruption d'une opération de brossage des dents avant d'avoir atteint le temps de brossage standard et/ou le temps de brossage voulu et/ou le temps de brossage minimum.

11. Dispositif de brossage des dents selon l'une des revendications 1 à 10, **caractérisé en ce que** le dispositif (15) d'enregistrement du temps présente un organe de poursuite pour l'enregistrement du temps de brossage effectif au-delà des brèves interruptions de l'opération de brossage des dents.
